# EUROPÄISCHE PATENTSCHRIFT

(11) **EP 0 600 152 B1**
(45) Veröffentlichungstag und Bekanntmachung des Hinweises auf die Patenterteilung: **18.09.1996**
(21) Anmeldenummer: 93110421.0
(22) Anmeldetag: 30.06.1993
(51) Int. Cl.: B60K 35/00, G12B 9/10, B60K 37/02

(54) **Kombinationsinstrument**
Combination instrument
Instruments combinés en un seul

(30) Priorität: 02.12.1992 DE 4240457; 06.05.1993 DE 4315027
(43) Veröffentlichungstag der Anmeldung: 08.06.1994
(73) Patentinhaber: VDO Adolf Schindling AG, D-60487 Frankfurt (DE)
(72) Erfinder: Simon, Ernst-Ulrich, D-6370 Oberursel (DE); Zech, Stephan, D-6228 Eltville (DE); Langhammer, Josef, D-6367 Karben (DE)
(74) Vertreter: Klein, Thomas, Dipl.-Ing. (FH)

(56) Entgegenhaltungen:
- DE-A- 3 800 572
- DE-A- 3 834 623
- DE-A- 4 019 007
- FR-A- 2 488 555
- GB-A- 2 064 879

## Beschreibung

Die Erfindung betrifft ein Kombinations-Instrument mit einem Frontrahmen, einer durchsichtigen Abdeckung für den Frontrahmen, im Kombinations-Instrument gelagerten Anzeigesystemen und/oder Bedienelementen, einer hinter den Anzeigesystemen und/oder Bedienelementen angeordneten Leiterplatte mit Elektronikkomponenten, wobei die Anzeigesysteme und/oder Bedienelemente die Leiterplatte kontaktieren, sowie mit einem hinteren Verschlußdeckel für das Kombinations-Instrument. Ein derartiges Kombinations-Instrument findet insbesondere bei Fahrzeugen, vor allem bei Kraftfahrzeugen Verwendung.

Kombinations-Instrumente der genannten Art sind im wesentlichen modular aufgebaut. Die Module werden von Grundplatten, dem Frontrahmen, dem Verschlußdeckel oder ähnlichen Teilen aufgenommen. Es sind insbesondere Lösungen bekannt, bei denen der Frontrahmen als tragendes Bauteil die Verbindung zur Armaturentafel herstellt, womit es erforderlich ist, daß der Frontrahmen eine hohe Steifigkeit aufweist. Die erforderliche Festigkeit des Frontrahmens gibt weitgehend dessen Gestaltung vor, womit die optische Gestaltung des Frontbildes des Kombinations-Instrumentes im wesentlichen vorgegeben ist. Im übrigen gestattet die Steifigkeitsanforderung des Frontrahmens keine freie Materialwahl, so daß für eine optimale optische Erscheinung des Frontbereiches des Kombinations-Instrumentes günstige Materialien nicht zum Einsatz kommen können. Da neben dem Frontrahmen auch die Grundplatten, der Verschlußdeckel oder ähnliche Teile die Module aufnehmen, müssen auch diese Bauteile festigkeitsmäßig so gestaltet sein, daß sie eine tragende Funktion übernehmen können. Unabhängig hiervon bedingt die Lagerung der Module in diversen Bauteilen, daß das Kombinations-Instrument im Aufbau kompliziert ist und auch einen hohen Montageaufwand erfordert.

Aus der GB-A-2 064 879 ist ein Anzeigeinstrument bekannt, das einen Frontrahmen aufweist, wobei in dem Instrument ein Anzeigesystem und Bedienelemente gelagert sind. Hinter dem Anzeigesystem und den Bedienelementen ist eine Leiterplatte mit Elektronikkomponenten angeordnet, wobei das Anzeigesystem und die Bedienelemente die Leiterplatte kontaktieren. Auf der Rückseite ist das Instrument durch einen Verschlußdeckel verschlossen. Zwischen dem Frontrahmen und dem Verschlußdeckel ist ein Zwischenteil angeordnet, das die Leiterplatte trägt. Das Anzeigesystem und die Bedienelemente sind im Frontrahmen angeordnet.

Es ist Aufgabe der vorliegenden Erfindung, ein Kombinations-Instrument der genannten Art so weiterzubilden, daß es insbesondere einfach im Aufbau und in der Montage und damit kostengünstig herstellbar ist.

Gelöst wird die Aufgabe bei einem Kombinations-Instrument der genannten Art dadurch, daß es einen als tragendes Bauteil ausgebildeten Systemträger aufweist, der mit Ausnehmungen zum Positionieren und Halten der Anzeigesysteme und/oder Bedienelemente versehen ist, wobei die Leiterplatte mit dem Systemträger verbunden ist und daß der Frontrahmen und/oder der hintere Verschlußdeckel als nicht tragendes Bauteil ausgebildet sind, die im Systemträger positioniert und gehalten sind.

Das Wesentliche der erfindungsgemäßen Lösung ist darin zu sehen, daß der bekannte modulare Aufbau durch einen Systemträger mit zusätzlichen Funktionen ersetzt wird. Ein derartiges Bauteil gestattet eine große gestalterische Freiheit, so daß beispielsweise keine weiteren tragenden Elemente für den Kombinationsaufbau benötigt werden. Der Systemträger ist damit das tragende Element des Kombinations-Instrumentes. Hierdurch ist die Möglichkeit gegeben, Einzelteile, gegebenenfalls unterschiedlicher Materialien, zu reduzieren. Alle Einzelteile und Baugruppen können in der Endmontage dem Systemträger zugeführt werden. Hierbei entsteht die Typenvielfalt. Mit diesem Konzept entfällt die bisher erforderliche Modulvormontage. An der so entstandenen Funktionseinheit sind alle Justage- und Prüfvorgänge durchführbar. Es entfällt die Prüfung der einzelnen Module, womit sich die Anzahl der Prüfungen erheblich reduziert. Der Systemträger gestattet darüber hinaus den Einsatz von Einzelzifferblättern und zusammenhängenden Zifferblättern. Hierdurch sind beim Einsatz von zusammenhängenden Zifferblättern Fehlkombinationen ausgeschlossen, dies gilt auch für Symbolscheiben oder ähnliche Komponenten. Das Systemträger-Konzept erlaubt schließlich das Erstellen einer Funktionseinheit. Damit sind die Voraussetzungen für eine sinnvolle Linien- oder Gruppen-Montage geschaffen. Die Gruppen-Montage kann mit einem hohen Arbeitsinhalt und Verantwortung zur Erzielung der geforderten Qualität ausgestattet werden.

Die Verbindung des Frontrahmens, worunter auch eine Frontrahmen-Baugruppe verstanden wird, kann gegebenenfalls unter Einsatz von Verbindungsteilen mit dem Systemträger erfolgen. Dadurch, daß der Frontrahmen bzw. der Verschlußdeckel nicht tragend ausgestaltet werden können, besteht die Möglichkeit, diese als dünnwandiges Bauteil auszuführen, das beispielsweise über ein Filmscharnier mit dem Systemträger verbunden ist. Insbesondere der Verschlußdeckel kann dabei unmittelbar an dem Systemträger angespritzt oder sogar als Folie ausgebildet sein. Es ist auch denkbar, daß der Verschlußdeckel mit dem Frontrahmen verbunden ist, wobei Verschlußdeckel und Frontrahmen im Systemträger geführt und gehalten sind. Ist der Verschlußdeckel mit Ausnehmungen versehen, besteht die Möglichkeit, elektrische Bauteile, beispielsweise Lampen/Röhren, im Kombinations-Instrument auszutauschen, ohne daß der Deckel geöffnet werden muß.

Ein wesentliches Merkmal der vorgenannten Erfindung besteht in der Lagerung der Leiterplatte im Systemträger. So ist einerseits für die Meßwerke, anzeigenden Komponenten, wie z.B. LCD-Bedienelemente usw., eine Führung und Befestigung in Verbindung mit der Kontaktierung notwendig. Andererseits sind mechanische Belastungen auszuschließen, die sich z.B. durch unterschiedliche Temperaturausdehnungskoeffizienten der bei Kombinations-Instrumenten verwendeten Bauteile ergeben. So ist der Systemträger in einer möglichen Ausführungsform als starrer Rahmen gestaltet, der mittels federnder Elemente Meßwerke, Zifferblätter, Bedienelemente und Aufnahmen für andere anzeigende Komponenten schwimmend trägt. Anzeigefehler, verursacht durch unterschiedliche Ausdehnungskoeffizienten, werden so eliminiert. Weiter sind die Voraussetzungen für eine belastungsfreie elektrische Kontaktierung geschaffen. Erfordert der Gesamtaufbau des Kombinations-Instrumentes die beschriebene Entkopplung nicht, ist z.B. eine starre Ausführung des Systemträgers vorgesehen.

Im erfindungsgemäßen Sinne soll unter dem Wort Anzeigesystem jegliches System verstanden werden, das demjenigen, der auf das Kombinations-Instrument blickt, eine Information vermittelt. Bei einem Anzeigesystem kann es sich beispielsweise um ein Meßwerk, insbesondere ein Meßwerk mit Zeiger und Zifferblatt bzw. Symbolscheibe oder eine anzeigende Komponente, insbesondere unter Verwendung von Licht handeln. Unter Bedienelementen werden alle diejenigen Komponenten verstanden, die extern bedient werden können, beispielsweise ein Stößel zum Zurückstellen eines Tageskilometerzählers, ein Stößel zum Abrufen bzw. Löschen einer in einem Display des Kombinations-Instrumentes angezeigten Information usw.

Der Systemträger vereinigt damit unterschiedliche Funktionen: Er stellt den Träger für Meßwerke aller Art dar, er kann die Funktion eines Halters und damit einer Positionierung für LCDs mit Leitgummiführung übernehmen, ferner eine Führung und Halterung für die Bedienelemente darstellen. Mittels des Systemträgers kann schließlich Licht geführt werden. So sind Lichtführungen, beispielsweise für Informations- und Warnfelder, die durch verschiedene Lichtquellen beleuchtet werden können, möglich. Es sind auch Lichtführungen für Zifferblätter, Zeiger und Lichteinkopplungen bei Durchlichtbeleuchtung denkbar. Partiell benötigte Lichtdichtheit für Lampenschächte, LCD-Gehäuse o.ä. kann durch aus zwei Materialien hergestellte Teile, insbesondere unter Einsatz von Zweifarben-Spritzgußtechnik hergestellte Teile, erreicht werden. Für die Lichtführung ist der Systemträger bevorzugt aus Plexiglas hergestellt. Lichtkästen für beispielsweise Auflichtbeleuchtung können mittels eines Filmscharnieres bzw. mehrerer Filmscharniere an den Systemträger angebunden werden. Der Systemträger ermöglicht darüber hinaus die Positionierung und Halterung der anzeigenden Komponenten, beispielsweise der Lichtquellen, wie Glühlampen, Kalt-Kathoden-Röhren usw., sowie die Positionierung und Befestigung von elektronischen Baugruppen verschiedener Anzahl und Größe, wie beispielsweise der Leiterplatte, unter Umständen auch Leiterplatten, und Hybriden. Daneben kann der Systemträger der Positionierung und Befestigung von einteiligem Zifferblatt, Einzelzifferblättern und Blenden, die aus Design-Gründen notwendig sind, bei Auf- und Durchlichtbeleuchtung sowie deren Kombination dienen.

Um die Montage des Kombinations-Instrumentes besonders einfach zu gestalten, ist vorgesehen, daß der Systemträger auf seiner Rückseite mit den Ausnehmungen für die Anzeigesysteme bzw. Bedienelemente versehen ist. Die Ausnehmungen sind bevorzugt als Schächte ausgebildet und/oder durch der Versteifung des Systemträgers dienende Rippen und/oder Waben gebildet. Durch die grundsätzliche Verrippung bzw. Wabengestaltung des Systemträgers besitzt dieser eine hohe Steifigkeit bei geringem Einsatzgewicht. Bei einer entsprechenden Anordnung der Rippen bzw. Waben können diese als Ausnehmungen fungieren und bei einer besonderen Gestaltung die Schächte bilden.

Gemäß einer besonderen Ausführungsform der Erfindung ist vorgesehen, daß entsprechend dem maximalen Bestückungsumfang an Anzeigesystemen und/oder Bedienelementen Ausnehmungen im Systemträger vorgesehen sind. Hiermit ist ein erheblicher Logistikvorteil verbunden, da der Systemträger grundsätzlich im Sinne aller möglichen Varianten betreffend Anzeigesysteme und/oder Bedienelemente bestückt werden kann, und bei einem minderen Bestückungsumfang Ausnehmungen im Systemträger entsprechend frei bleiben. Es wird darüber hinaus als vorteilhaft angesehen, wenn die Ausnehmungen, soweit erforderlich, charakteristische Querschnitte für die zugeordneten Anzeigesysteme bzw. Bedienelemente aufweisen. Bei einer entsprechenden, unterschiedlichen Gestaltung der Anzeigesysteme bzw. Bedienelemente ist deren Fehlmontage dann ausgeschlossen.

Zweckmäßig erstreckt sich der Systemträger über die gesamte Sichtfläche des Kombinations-Instrumentes. Er weist damit im wesentlichen die gleiche Höhen- und Breitenerstreckung wie der Frontrahmen auf.

In vorbezeichnetem Sinne sehen grundsätzliche Ausführungsformen vor, daß die Leiterplatte schwimmend im Systemträger gelagert ist. Bei einer bevorzugten Ausführungsform sind die Anzeigesysteme bzw. Bedienelemente senkrecht zur Längserstreckung der Ausnehmungen unverschieblich im Systemträger gelagert und es sind die Leiterplatte in der Leiterplattenebene bzw., falls vorhanden, auch die Zifferblätter in der Zifferblattebene relativ zum Systemträger verschieblich gelagert. Die schwimmende Lagerung der Komponenten im Systemträger, die nicht auf Leiterplatten und Zifferblätter beschränkt ist, kann beispielsweise mittels Zapfen-Langloch-Verbindungen zwischen den Komponenten und dem Systemträger erfolgen; statt eines Zapfens ist es auch denkbar, Bolzen, Schrauben oder ähnliches zu verwenden. Die Verbindung der Komponenten mit dem Systemträger stellt dabei sicher, daß eine Bewegung der Komponenten senkrecht zum Systemträger ausgeschlossen ist. Bei einer schwimmenden Lagerung der Leiterplatte im Systemträger ist darüber hinaus sicherzustellen, daß die Kontaktierung von Anzeigesystemen und/oder Bedienelementen mit der Leiterplatte schwimmend erfolgt. Dies kann dadurch erfolgen, daß die Kontaktstelle im Bereich der Leiterplatte in Richtung der Leiterplattenebene verschieblich ist.

Im Ergebnis bedeutet dies, daß dann, wenn ein Systemträger, zum Beispiel ein starrer Systemträger, in einem Kombinations-Instrument zur Anwendung kommt, für die Komponenten mit unterschiedlichen Ausdehnungskoeffizienten, die auf dem Systemträger montiert werden, ein entsprechender Ausgleich geschaffen wird. Die Langlöcher sind dabei so angeordnet, daß bei Ausgleich der Fertigungstoleranzen eine paßgenaue Positionierung gewährleistet ist. Diese paßgenaue Positionierung ist auch bei unterschiedlichen Längenausdehnungen über der Temperatur der einzelnen Komponenten gewährleistet. Dies wird insbesondere dadurch erreicht, daß die Langlöcher der x- und y-Achse im rechten Winkel angeordnet sind. Das in der y-Achse verlaufende Langloch ist dabei weitgehend in der Mitte der jeweiligen Komponente angeordnet. Sind die Zapfen Bestandteil des Systemträgers und beispielsweise auf dessen Ober- und Unterseite angespritzt, kann eines besonders hohe Positioniergenauigkeit, insbesondere der Leiterplatte zum Zifferblatt erreicht werden. Die Befestigung der Komponenten am Systemträger kann beispielsweise mittels Schrauben diverser Ausführung, gegebenenfalls mit angeprägter Unterlegscheibe, oder über an den Systemträger angespritzte Nietbolzen erfolgen. Die Befestigung der Komponenten auf dem Systemträger erfolgt dabei unabhängig von der gewählten Befestigungsart über Langlöcher in den zu befestigenden Komponenten. Vorteilhaft sind sie so angeordnet, daß das zu befestigende Anzeigesystem bzw. das zu befestigende Bedienelement bei Längenänderung der Komponenten zueinander über der Temperatur in den Langlöchern gleiten können. Dies wird insbesondere dadurch erreicht, daß die Längsausrichtung der Langlöcher entsprechend einer Geraden von einem Nullpunkt zu dem Mittelpunkt des jeweiligen Langloches erfolgt. Der Nullpunkt ist der Schnittpunkt der Längsachse der zur Positionierung der Komponenten verwendeten Langlöcher. - Eine weitere bevorzugte Ausführungsform geht davon aus, daß die Leiterplatte und diejenigen Anzeigesysteme, die verschiebbar sein müssen, um Spannungen auszugleichen, senkrecht zur Längserstreckung der Ausnehmungen verschieblich im Systemträger gelagert sind. Dies kann insbesondere dadurch erfolgen, daß die verschiebliche Leiterplatte und die verschieblichen Anzeigesysteme in Ausnehmungen gehalten sind, wobei die die Ausnehmungen aufweisenden Bauteile des Systemträgers über senkrecht zur Längserstreckung der Ausnehmung nachgiebige Stege im Systemträgerrahmen gehalten sind.

Wie vorstehend beschrieben ist es nicht erforderlich, daß dem Frontrahmen und dem Verschlußdeckel tragende Funktion zukommt. Dies ist insbesondere für den Frontrahmen von Bedeutung, der somit weitgehend materialunabhängig gestaltet und so wesentlich billiger und unter optischen Gesichtspunkten günstiger hergestellt werden kann. Dies gilt auch für die durchsichtige Abdeckung, die in aller Regel als Deckglas ausgebildet ist. Bei bekannten Kombinations-Instrumenten ist es erforderlich, daß auch das Deckglas zur Formstabilität des Kombinations-Instrumentes beiträgt. Da eine tragende Funktion des Deckglases vorliegend nicht erforderlich ist, kann es gleichfalls weitgehend frei gestaltet sein, auch was dessen Material betrifft. Wegen der nicht tragenden Funktion des Großteils der bei dem Kombinations-Instrument verwendeten Bauteile und der Möglichkeit, deren Materialien weitgehend frei bestimmen zu können, können vereinfacht Konzepte entwickelt werden, die eine günstige Recyclingfähigkeit des Kombinations-Instrumentes gestatten. Schließlich erlaubt es der Umstand, daß der Systemträger das tragende Bauteil des Kombinations-Instrumentes darstellt, den Masseschwerpunkt des Kombinations-Instrumentes in den Systemträger zu legen. Dies gestattet es wiederum, das Kombinations-Instrument mittels des Systemträgers an einer Armaturentafel zu befestigen und dennoch sicherzustellen, daß die Befestigung im Massenschwerpunkt des Kombinations-Instrumentes liegt.

Weitere Merkmale der Erfindung sind in der Beschreibung der Figuren sowie den Figuren dargestellt, wobei bemerkt wird, daß alle Einzelmerkmale und alle Kombinationen von Einzelmerkmalen erfindungswesentlich sind.

In den Figuren ist die Erfindung anhand mehrerer Ausführungsformen dargestellt, ohne auf diese beschränkt zu sein. Es stellt dar:
- Figur 1: eine grundsätzliche Gestaltung des erfindungsgemäßen Kombinations-Instrumentes,
- Figur 2: eine erste Ausführungsform des bei dem Kombinations-Instrument Verwendung findenden Systemträgers, gezeigt für den bestückten Systemträger, in einer Vorderansicht des Systemträgers,
- Figur 3: ein Schnitt gemäß der Linie A-J in Figur 2,
- Figur 4: eine Vorderansicht des nicht bestückten Systemträgers,
- Figur 5: eine Rückansicht des nicht bestückten Systemträgers,
- Figur 6: einen Schnitt gemäß der Linie E-E in Figur 5,
- Figur 7: eine Darstellung des Details X in Figur 3,
- Figur 8: eine prinzipielle Darstellung einer schwimmenden Verbindung einer Leiterplatte und eines Zifferblattes mit dem Systemträger, gezeigt in einer vereinfachten Schnittdarstellung,
- Figur 9: eine Draufsicht des in Figur 8 gezeigten Zifferblattes,
- Figur 10: eine Draufsicht der in Figur 8 gezeigten Leiterplatte,
- Figur 11: eine zweite Ausführungsform des Systemträgers, in nicht bestücktem Zustand, in einer Vorderansicht gesehen,
- Figur 12: einen Schnitt gemäß der Linie A-A in Figur 11,
- Figur 13: eine Rückansicht des in den Figuren 12 und 13 gezeigten Systemträgers,
- Figur 14: einen Schnitt gemäß der Linie B-B in Figur 13,
- Figur 15: eine Teildarstellung gemäß Figur 13, mit bestücktem Systemträger,
- Figur 16: eine abgewandelte Gestaltung des erfindungsgemäßen Kombinations-Instrumentes für Durchlichtbeleuchtung,
- Figur 17: eine vergrößert gezeichnete Darstellung des in Figur 16 in einer Schnittdarstellung verdeutlichten Kombinations-Instrumentes und
- Figur 18: eine Explosionsdarstellung eines gegenüber der Darstellung in Figur 1 abgewandelten Kombinations-Instrumentes.

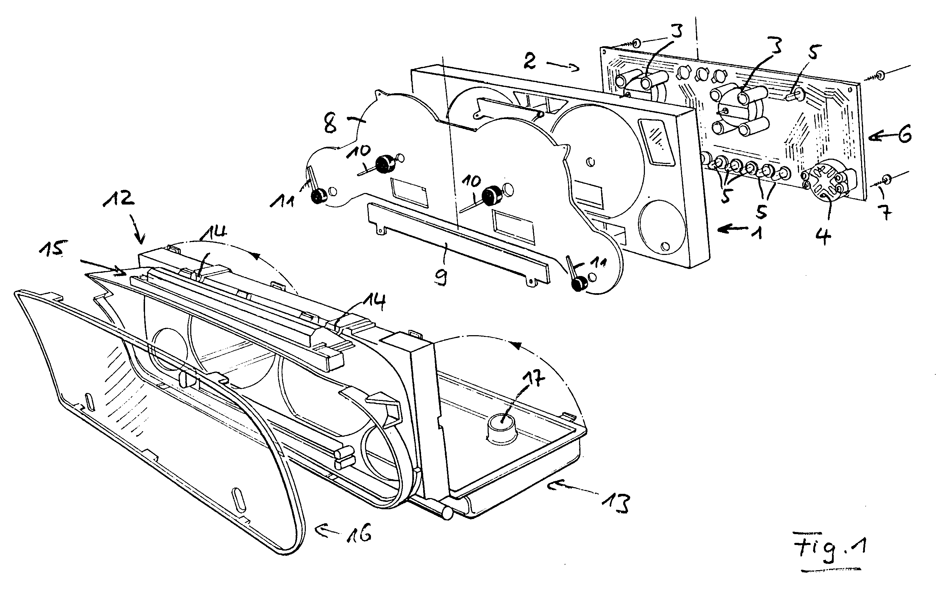

Das in Figur 1 in einer Explosionsdarstellung gezeigte Kombinations-Instrument weist zunächst einen Systemträger 1 auf. Dieser ist auf seiner nicht einsehbaren Rückseite mit einer Vielzahl von Ausnehmungen für Anzeigesysteme und Bedienelemente versehen. Sichtbar sind nur Anzeigesysteme 2 in Form von Meßwerken 3 und 4 sowie auf Lichtbasis arbeitende anzeigende Komponenten 5. Weitere Bedienelemente 2, wie beispielsweise Laufwerke, LCDs, Einzelteile für diese, wie Leitgummi, Streu- und Farbscheiben, Lichtführungsteile sowie Schaltmatten und Stößel im Zusammenhang mit den Bedienteilen sind nicht verdeutlicht. Die Anzeigesysteme bzw. Bedienteile werden von hinten in die Ausnehmungen im Systemträger 1 eingelegt und anschließend eine Leiterplatte 6 auf den Systemträger 1 und die Anzeigesysteme 2 aufgelegt und mit ersterem mittels Schrauben 7 verbunden. Auf die Vorderseite des Systemträgers 1 wird ein einteiliges Zifferblatt 8 und gegebenenfalls eine Blende 9 aufgelegt und befestigt, die Befestigung erfolgt beispielsweise durch Vernieten von nicht näher gezeigten Aufnahmebolzen für das Zifferblatt 8 bzw. die Blende 9. Es können ferner Symbolscheiben auf die Vorderseite des Systemträgers 1 aufgelegt und mit diesem verbunden werden. Es werden dann auf die Meßwerke 3 und 4 die Zeiger 10 und 11 aufgesetzt. Die so gebildete Einheit wird dann in den Frontrahmen 12 eingefügt, mit dem über ein nicht dargestelltes Filmscharnier der Verschlußdeckel 13 verbunden ist. Über Filmscharniere 14 steht mit dem Frontrahmen 12 ein Lichtkasten 15 für Auflichtbeleuchtung in Verbindung, die Kontaktierung der Lichtquellen des Lichtkastens 15 erfolgt über nicht dargestellte Mittel, die mit der Leiterplatte 6 in Verbindung stehen. Abgeschlossen wird der Frontrahmen 12 durch ein Deckglas 16, das in den Frontrahmen 12 eingeklipst werden kann. Nach dem Einpassen des Systemträgers 1 mit den mit ihm verbundenen Komponenten in den Frontrahmen 2 wird der Verschlußdeckel 13 geschlossen, wobei dieser und der Frontrahmen 12 miteinander verrasten. Ausnehmungen 17 im Verschlußdeckel 13 gestatten die Zugänglichkeit von bestimmten Anzeigesystemen 2 bzw. Bedienelementen. Gehalten wird das Kombinations-Instrument über nicht dargestellte Mittel in einer Armaturentafel eines Kraftfahrzeuges, diese Mittel greifen unmittelbar am Systemträger 1 an, bevorzugt in dessen Masseschwerpunkt.

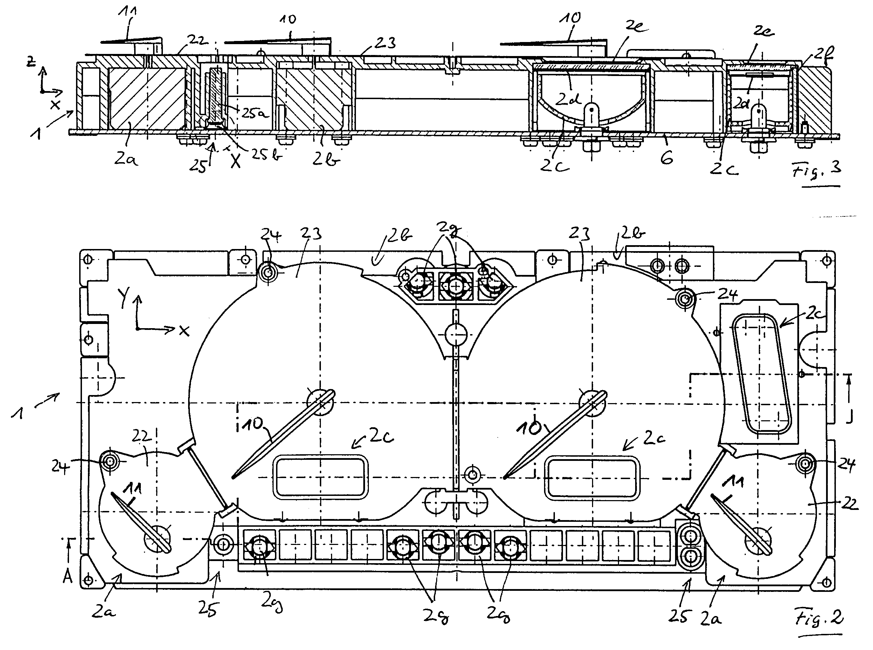

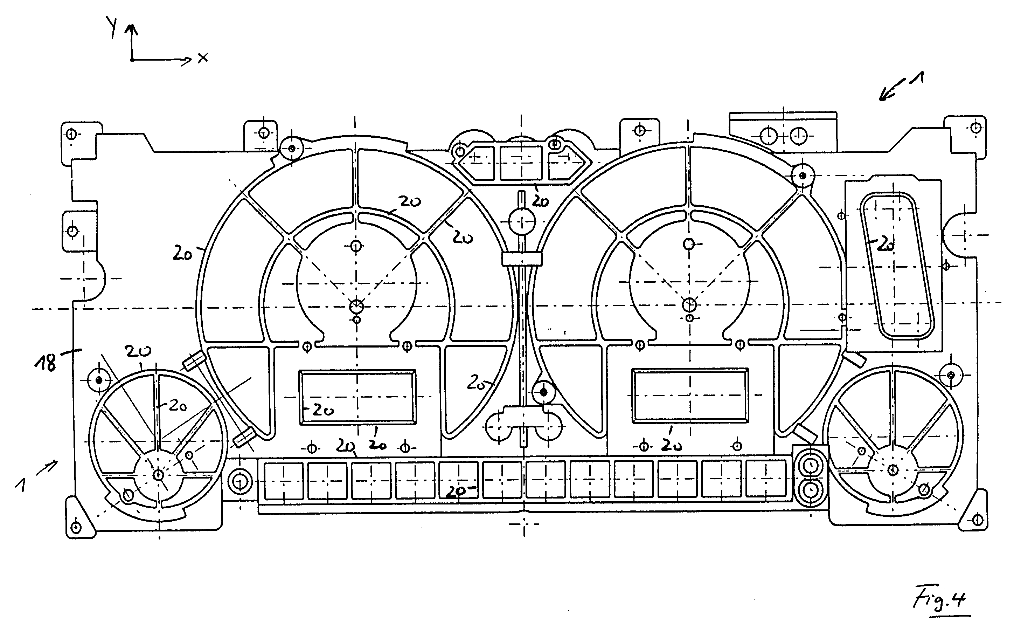

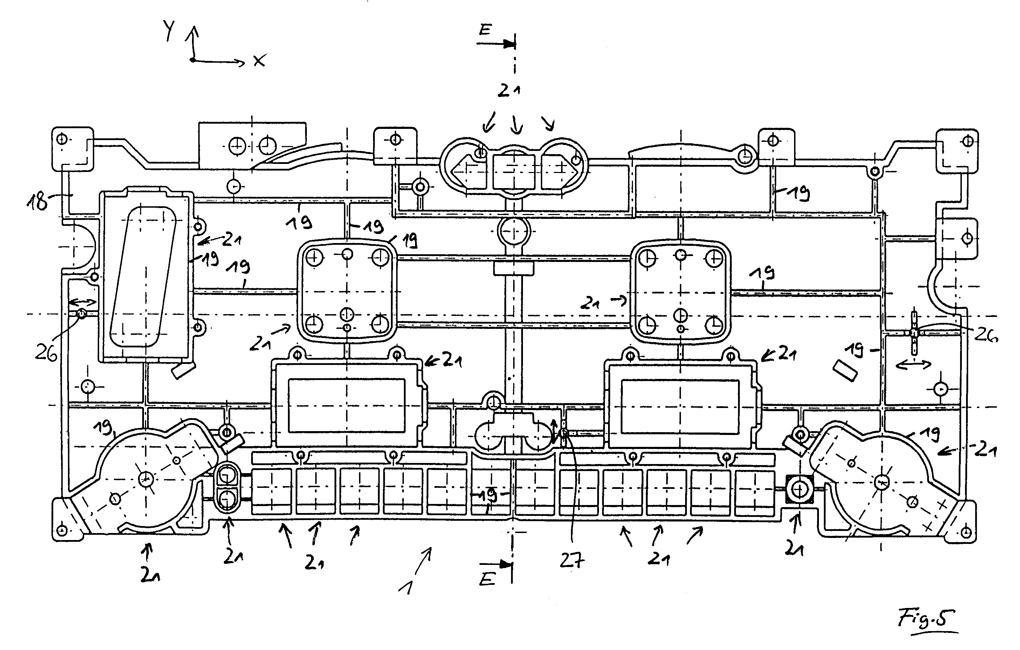

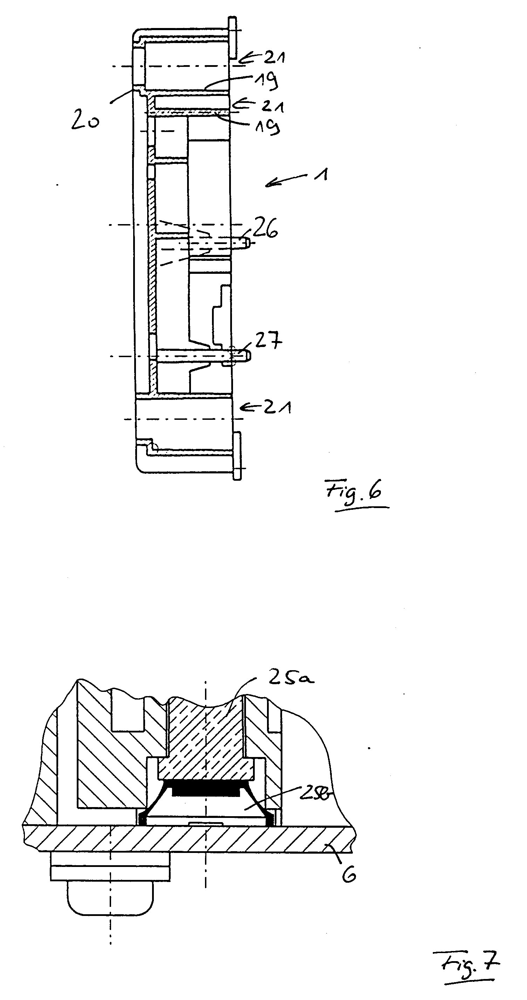

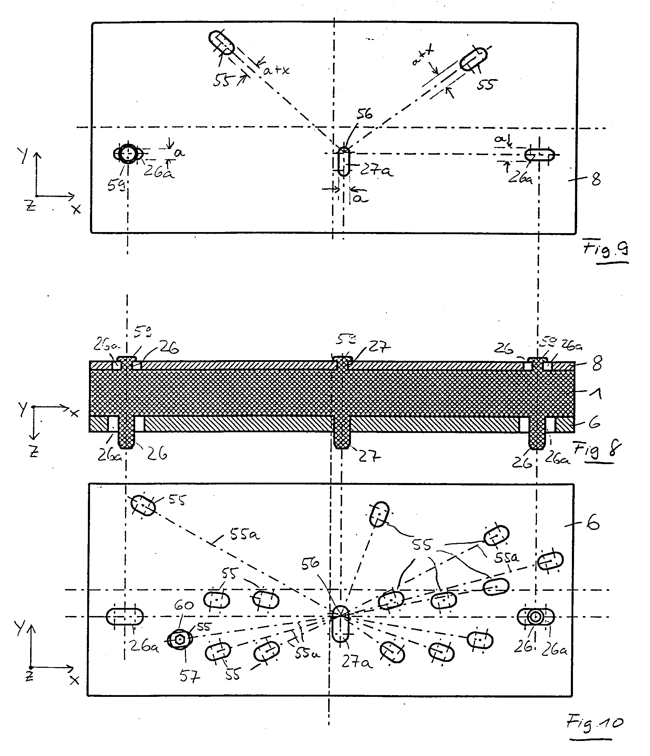

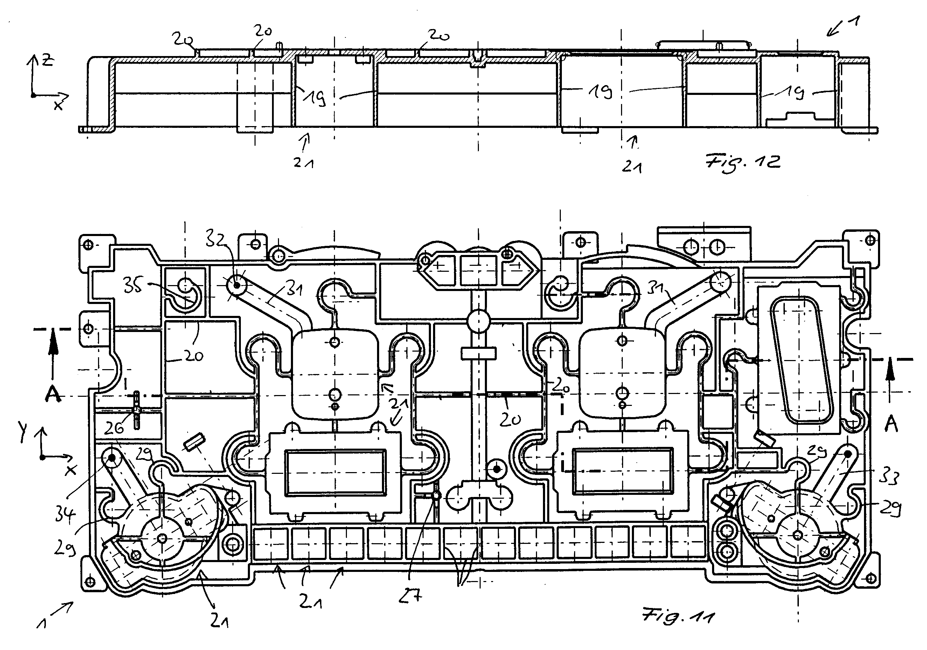

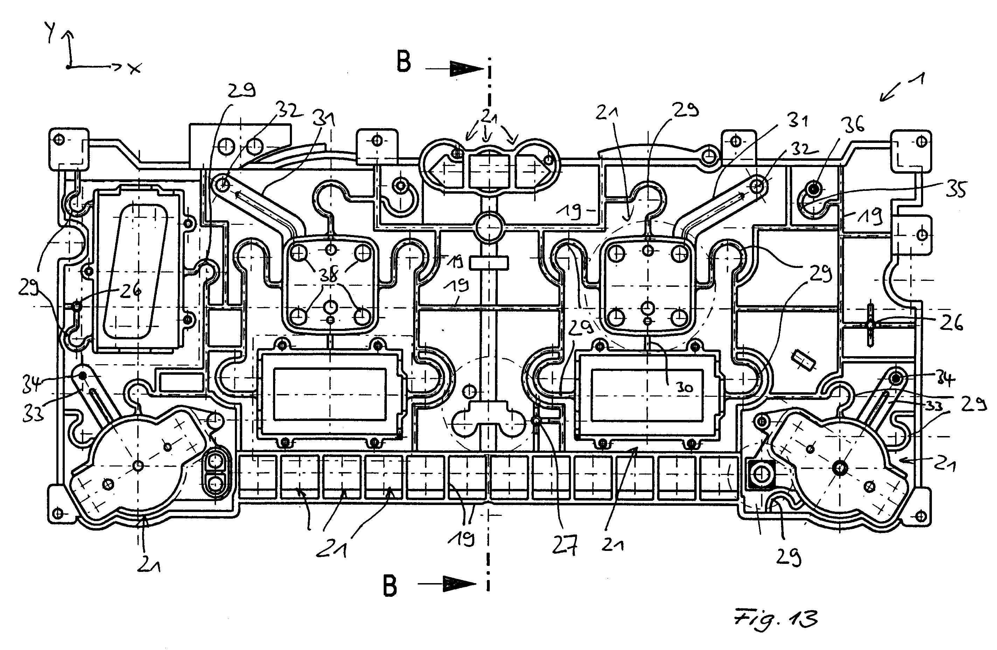

Nachfolgend ist die Ausgestaltung der ersten besonderen Ausführungsform des Kombinations-Instrumentes anhand der Darstellung der Figuren 2 bis 7 beschrieben. Diese Ausführungsform bezieht sich auf eine schwimmende Lagerung der Leiterplatte 6. Die Figuren 4 und 5 verdeutlichen, daß der Systemträger 1 aus einer Grundplatte 18 sowie rückseitigen Rippen bzw. stegförmigen Versteifungen 19 und frontseitigen Rippen bzw. stegförmigen Versteifungen 20 besteht. Einige dieser Rippen bzw. stegförmigen Versteifungen sind mit den Bezugsziffern 19 bzw. 20 kenntlich gemacht. Während sich die frontseitigen Rippen/stegförmigen Versteifungen 20 nur über eine geringe Länge in Z-Richtung (siehe Figur 3) erstrecken, weisen die rückseitigen Rippen bzw. Versteifungen 19 eine größere Erstreckung in Z-Richtung auf, so daß ausgewählte rückseitige Rippen bzw. stegförmige Versteifungen 19 schachtförmige Ausnehmungen 21 zur Aufnahme der Anzeigesysteme und Bedienelemente bilden. Die Figuren 2 und 3 veranschaulichen die Bestückung des Systemträgers 1 mit den Anzeigesystemen. Die schachtförmigen Ausnehmungen 21 unten links und unten rechts nehmen jeweils ein Anzeigesystem 2 in Art eines Drehmagnetmeßwerkes 2a auf. Der kreisförmige Querschnitt des jeweiligen Drehmagnetmeßwerkes 2a ist bezüglich des Aufnahmequerschnittes der zugeordneten schachtförmigen Ausnehmung 21 so abgestimmt, daß das Drehmagnetmeßwerk 2a spielfrei in dieses eingesetzt werden kann und damit sicher hierin gehalten ist. Das eine Drehmagnetmeßwerk 2a dient beispielsweise dem Anzeigen des Tankfüllstandes, das andere Drehmagnetmeßwerk 2a dem Anzeigen der Kühlwassertemperatur des Motors. Auf die Frontseite des Systemträgers 1 sind entsprechende Symbolscheiben 22 um die Ausgangswellen der Drehmagnetmeßwerke 2a gelegt und Zeiger 11 auf die Ausgangswellen gesteckt. In zwei weitere schachtförmige Ausnehmungen 21 sind Schrittmotoren 2b entsprechend eingefügt. Der eine Schrittmotor 2b dient beispielsweise dem Anzeigen der Fahrgeschwindigkeit des Kraftfahrzeuges, der andere Schrittmotor 2b dem Anzeigen der Motordrehzahl. Auf die Frontseite des Systemträgers 1 sind entsprechend Zifferblätter 23 aufgelegt, die Wellen der Schrittmotoren 2b durchsetzen Öffnungen in den Zifferblättern 23 und es sind auf die Wellen die Zeiger 10 aufgesteckt. Der Darstellung der Figur 2 ist insbesondere zu entnehmen, daß die Symbolscheiben 22 und Zifferblätter 23 eine bauliche Einheit darstellen. Befestigt wird diese Einheit durch Verstemmen von Zapfen 24, die die Ausnehmungen in der Einheit durchsetzen. Drei weitere schachtförmige Ausnehmungen 21 dienen der Aufnahme von Anzeigesystemen, die Lichtkästen 2c mit davor befindlichen Farb-/Streuscheiben 2d und LCDs 2e aufweisen, wobei die LCDs 2e über Leitgummis die Leiterplatte 6 kontaktieren. Das Anzeigesystem oberhalb des rechten Drehmagnetmeßwerkes 2a dient beispielsweise dem Anzeigen des angelegten Ganges bei einem Automatikgetriebe. Ferner sind eine Vielzahl identisch gestalteter schachtförmiger Ausnehmungen 21 zur Aufnahme von Anzeigesystemen in Form von Lichtquellen 2g, z.B. Kalt-Kathoden-Röhren, vorgesehen. Diese ragen frei, d.h. in X-Y-Richtung verschiebbar in die jeweiligen Ausnehmungen 21 hinein. Schließlich sind im Systemträger 1 Bedienelemente 25 in Form von Stößeln 25a gelagert. Der jeweilige Stößel 25a ist in einer schachtförmigen Ausnehmung 21 mit entsprechendem kreisförmigen Querschnitt verschieblich gelagert, wobei der Stößel 25a über eine Schaltmatte 25b (siehe Detaildarstellung in Figur 7) die Leiterplatte 6 kontaktiert. Zugänglich ist der jeweilige Stößel 25a über ausreichend große Öffnungen in der Grundplatte 18 des Systemträgers 1. Ein Bedienelement 25 kann beispielsweise dem Zweck dienen, den Tageskilometerzähler in Nullstellung zu überführen.

Der Darstellung der Figur 2 ist zu entnehmen, daß nicht alle möglichen schachtförmigen Ausnehmungen 21 bestückt sind. Dies deshalb, weil die schachtförmigen Ausnehmungen 21 des Systemträgers 1 den maximalen Bestückungsumfang vorgeben, wobei es aufgrund der kundenspezifischen Ausgestattung eines Fahrzeuges nur erforderlich ist, das Kombinations-Instrument mehr oder weniger mit Anzeigesystemen 2 und Bedienelementen 25 zu bestücken. Diverse schachtförmige Ausnehmungen 21 bleiben damit frei und werden frontseitig mittels Blenden abgedeckt.

Die schwimmende Verbindung des Systemträgers 1 mit der Leiterplatte 6 und dem Zifferblatt 8 läßt sich anschaulich anhand der Darstellung der Figuren 5, 6 und 8 bis 10 erläutern. In diesen ist gezeigt, daß der Systemträger 1 benachbart zu seinen Schmalseiten im Bereich der Schmalseitenmitten zwei Zapfen 26 aufweist, ferner, in diesem Abstand zur unteren Längsseite im Bereich der Längsseitenmitten einen weiteren Zapfen 27. Die Zapfen 26 und 27 stehen über die rückseitige Oberfläche des Systemträgers 1 hinaus und greifen in die in Figur 10 gezeigten Schlitzausnehmungen 26a und 27a der Leiterplatte 6 ein. Die mit den Zapfen 26 korrespondierenden Schlitzausnehmungen 26a der Leiterplatte 6 verlaufen in Längsrichtung der Leiterplatte, die mit dem Zapfen 27 korrespondierende Schlitzausnehmung 27a in der Leiterplatte in deren Querrichtung. Aufgrund der unterschiedlichen Wärmeausdehnungskoeffizienten der Leiterplatte 6 und des Systemträgers 1 ist somit eine Relativbewegung von Systemträger 1 und Leiterplatte 6 in X- und Y-Richtung möglich, konkret im Bereich der Zapfen 26 in X-Richtung, im Bereich des Zapfens 27 in Y-Richtung. Zum Befestigen der Leiterplatte 6 mit dem Systemträger 1 bzw. zum leitenden Verbinden der im Systemträger 1 aufgenommenen, eine relative Verschieblichkeit zur Leiterplatte 6 erfordernden Anzeigesysteme 3 bzw. 4 und Bedienelemente sind in der Leiterplatte weitere Langlöcher 55 vorgesehen. Diese sind im Bereich des jeweiligen Anzeigesystemes 2 bzw. Bedienelementes 25 vorgesehen, wobei die Längsachsen 55a der Langlöcher sich in einem Nullpunkt 56 schneiden, der im Ausführungsbeispiel im Schnittpunkt der Längsachsen der Langlöcher 26a und der Längsachse des Langloches 27a liegt. Die Befestigung der Leiterplatte 6 am Systemträger 1 kann beispielsweise durch Verschrauben oder Vernieten erfolgen. Gezeigt ist in der Figur 10 eine Schraube 57, die ein Langloch 55 in der Leiterplatte 6 durchsetzt und in den Systemträger eingeschraubt ist. Der Schraubenkopf dieser Schraube hält die Leiterplatte in der zur Figur 10 verdeutlichten Z-Richtung, das heißt, in einer Richtung senkrecht zur Plattenebene, während eine Verschiebung der Leiterplatte 6 in der Ebene X-Y nach wie vor möglich ist. Weitere Schrauben bzw. Nietverbindungen zum Fixieren der Leiterplatte 6 am Systemträger 1 können vorgesehen sein. Wie zuvor beschrieben, dient die Leiterplatte 6 nicht nur zum elektrischen Kontaktieren der Anzeigesysteme 2 und der Bedienelemente 25, sondern hält auch diese Bauteile in Z-Richtung. Damit die Leiterplatte 6 zum Systemträger 1 relativ beweglich ist, weisen alle Langlöcher eine solche Breitenabmessung auf, die um das mögliche Wärmedehnungsspiel in X- und Y-Richtung größer ist als der Gewindeabschnitt der jeweiligen Schraube bzw. des jeweiligen Zapfens. Unterlegscheiben 60, deren Außendurchmesser größer ist als die Breitenerstreckung des jeweiligen Langloches sind zwischen der Leiterplatte 6 und den Schraubenköpfen angeordnet. Während die Kontaktierung der Meßwerke 3 und 4 durch die in die Metallgehäuse der Meßwerke eingeschraubten Schrauben erfolgt, können die Lichtquellen 2g unmittelbar mit der Leiterplatte 6 verbunden sein, wobei die Relativbewegung zwischen den Lichtquellen 2g und den zugeordneten schachtförmigen Ausnehmungen 21 bzw. den Lichtkästen 2c aufgrund des gegenüber dem Durchmesser der Lichtquellen 2g vergrößerten Durchmessers bzw. Breiten-Tiefenmaßes der Ausnehmungen 21 bzw. Lichtkästen 2c möglich ist. Figur 9 verdeutlicht, daß der Dehnungsausgleich des Zifferblattes 8 entsprechend dem der Leiterplatte 6 erfolgt. So weist der Systemträger 1 auf der der Leiterplatte 6 abgewandten Seite entsprechende Zapfen 26 und 27 auf, die korrespondierende Langlöcher 26a und 27a durchsetzen, wobei die Langlöcher 26a in X-Richtung und das Langloch 27a in Y-Richtung orientiert ist. Mit der Bezugsziffer 59 ist eine kaltverstämmte Erweiterung im Bereich eines Zapfens 26 gezeigt, das heißt, es ist das Zifferblatt 8 mit dem Systemträger 1 kaltverstämmt. Während die Breitenerstreckung der Langlöcher 26a und 27a gemäß der Abmessungen der entsprechenden Langlöcher 26a und 27a der Leiterplatte 6 das Maß a besitzt, beträgt die Breitenabmessung der weiteren Langlöcher 55 das Maß a + x, um den Dehnungsausgleich zu ermöglichen. Die Längsachsen dieser Langlöcher 55 im Zifferblatt 8 sind wieder so orientiert, daß sie sich im Punkt 56, das heißt, der Schnittlinie der Längsachsen der Langlöcher 26a mit dem Langloch 27a im Zifferblatt 8 schneiden.

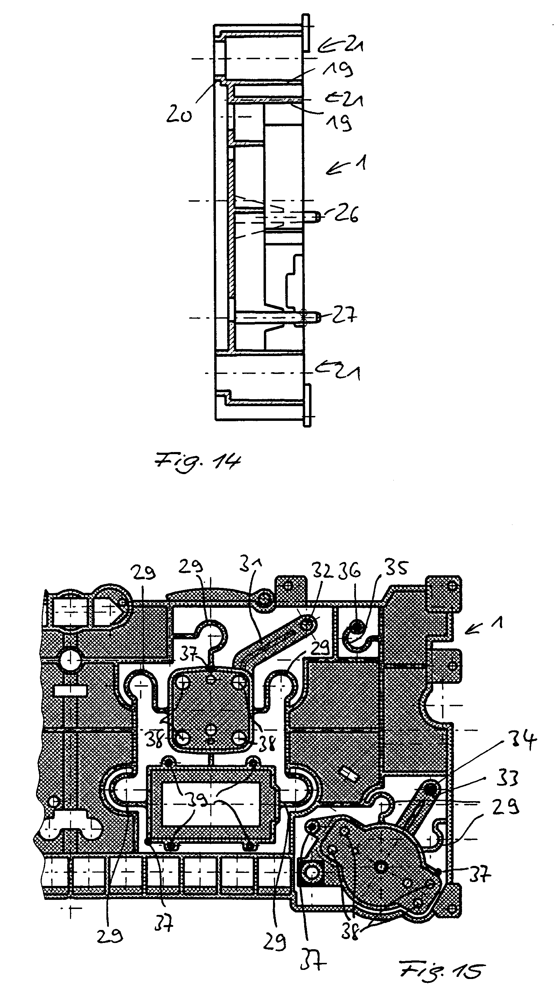

Bei der zu den Figuren 2 bis 7 beschriebenen ersten Ausführungsform sind damit die Anzeigesysteme 2 betreffend Drehmagnetmeßwerk 2a, Schrittmotoren 2b und Lichtkästen 2c starr im Systemträger 1 gelagert. Bei der zweiten Ausführungsform nach der Darstellung der Figuren 8 bis 12 wird hingegen vorgeschlagen, daß die Anzeigesysteme 2 betreffend Drehmagnetmeßwerk 2a, Schrittmotor 2b und Lichtkasten 2c in X-Y-Achse beweglich im Systemträger 1 gelagert sind, was auch für die Leiterplatte 6 gilt. Mit der ersten Ausführungsform in ihrer Gestaltung übereinstimmende Teile sind in der Darstellung der Figuren 8 bis 12 mit denselben Bezugsziffern bezeichnet.

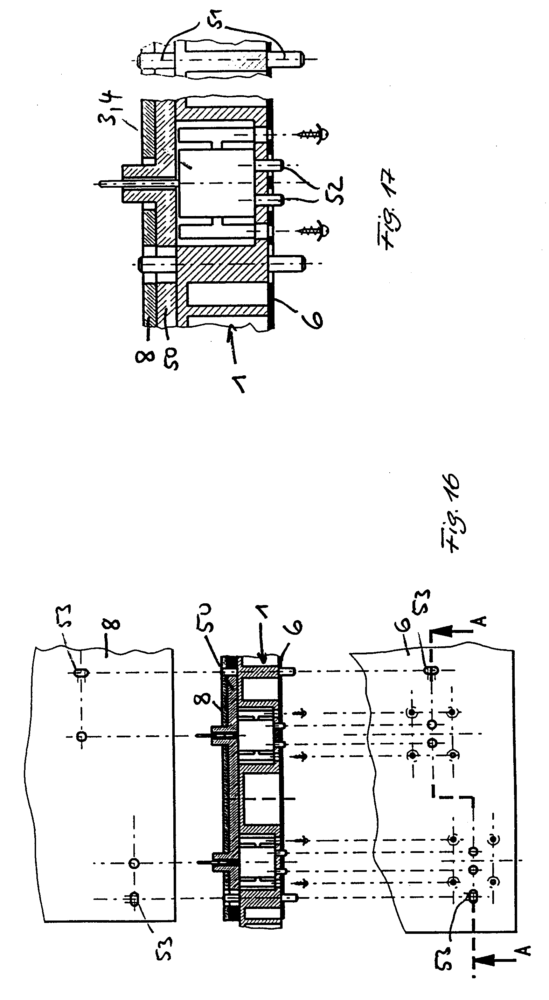

Die Figuren verdeutlichen, daß die schachtförmigen Ausnehmungen 21 der Drehmagnetmeßwerke 2a, der Schrittmotoren 2b und der Lichtkästen 2c über von der Grundplatte 18 des Systemträgers 1 entkoppelte Verbindungsstege 29 mit den Rippen 19 des Systemträgers 1 verbunden sind. Dabei ist die schachtförmige Ausnehmung 21 des jeweiligen Schrittmotors 2b mit der schachtförmigen Ausnehmung 21 des unterhalb des Schrittmotors 2b angeordneten Lichtkastens 2c über einen starren Steg 30 verbunden, so daß die beiden schachtförmigen Ausnehmungen 21 bewegungsgekoppelt sind. Mit der schachtförmigen Ausnehmung 21 des jeweiligen Schrittmotors 2b ist ferner ein Ansatz 31 starr verbunden, dessen freies Ende eine Ausnehmung 32 zum Positionieren bzw. Befestigen der als ein Bauteil ausgebildeten Zifferblätter/Symbolscheiben 23 bzw. 22 dient. Zum gleichen Zweck ist die schachtförmige Ausnehmung 21 des jeweiligen Drehmagnetmeßwerkes 2a mit einem Ansatz 33 mit Ausnehmung 34 im Bereich dessen freien Endes vorgesehen. Die wie vorbeschrieben in den Zapfen 26 und 27 in X- und Y-Richtung geführte Leiterplatte 6 ist zusätzlich mit einem, dem Längenausgleich dienenden Verbindungssteg 35 verbunden, der im Bereich seines freien Endes mit einer Ausnehmung 36 zum Befestigen der Leiterplatte 6 versehen ist. Der Verbindungssteg 35 greift an einer rückwärtigen Rippe 19 an. Pro im Systemträger 1 verschieblichem Anzeigesystem 2 sind jeweils zwei weitere Positionierungspunkte 37 für die Leiterplatte 6 vorgesehen (siehe Figur 12). Die gezeigten Ausnehmungen 38 dienen der Aufnahme von Befestigungsmitteln zum Kontaktieren/Befestigen des jeweiligen Drehmagnetmeßwerkes 2a bzw. Schrittmotors 2d mit der Leiterplatte 6. Die Ausnehmungen 39 dienen der Befestigung der LC-Anzeige.

Bei den vorbeschriebenen Ausführungsformen besteht der Systemträger 1 insbesondere aus transparentem Material, so daß er gleichzeitig die Funktion eines Lichtleiters übernimmt. Durchlichtbeleuchtung kann auch bei der in den Figuren 13 und 14 beschriebenen Ausführungsform Verwendung finden, bei der der Lichtleiter ein vom Systemträger separates Bauteil ist, wobei diese beiden Bauteile sandwichartig aufeinander liegen. Der Systemträger kann dann aus nicht transparentem Material, insbesondere nicht transparentem Kunststoff bestehen. Die Figuren 13 und 14 verdeutlichen den Systemträger (PP) 1 mit auf dessen Rückseite angeordneter flexibler Leiterplatte 6 sowie auf der der Leiterplatte 6 abgewandten Seite befindlichem Lichtleiter 50, der sandwichartig auf dem Systemträger 1 aufliegt und vom aus Kunststoff bestehenden Zifferblatt 8 abgedeckt ist. In die Blattebene sind die Leiterplatte 6 und das Zifferblatt 8 geklappt, um die Positionierung und Befestigung von Leiterplatte 6 bzw. Zifferblatt 8 am Systemträger 1 zu verdeutlichen. Mit der Bezugsziffer 51 sind Führungszapfen am Systemträger, mit der Bezugsziffer 52 Führungszapfen am Meßwerk 3 bzw. 4 bezeichnet. Die Führungszapfen 51 am Systemträger 1 wirken, wie oben zu den anderen Ausführungsformen beschrieben, mit um 90° zueinander versetzt angeordneten Langlöchern 53 in der Leiterplatte 6 bzw. dem Zifferblatt 8 zusammen.

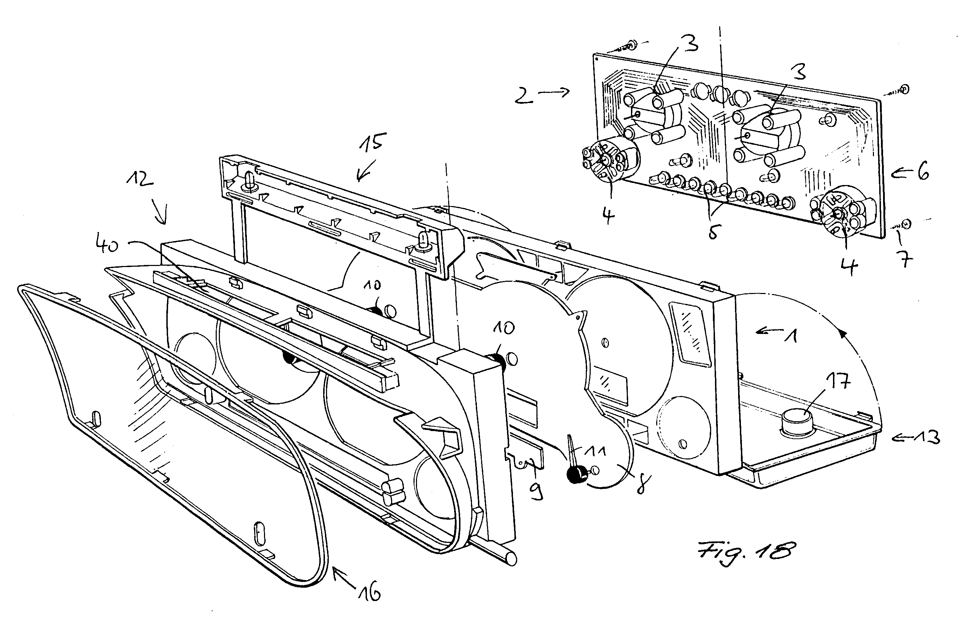

Die Darstellung der Figur 15 zeigt eine vom Grundsatz her insofern abgewandelte Gestaltung des Kombinations-Instrumentes, da bei diesem der Verschlußdeckel 13 über ein nicht gezeigtes Filmscharnier unmittelbar am Systemträger 1 angelenkt ist. Dieser wird mit dem Frontrahmen 12 unmittelbar verbunden. Im Unterschied zu der Darstellung in Figur 1 ist bei der grundsätzlichen Gestaltung nach Figur 13 der Lichtkasten 15 in seiner noch nicht auf die Lichtschächte 40 aufgesteckten Position gezeigt.

## Patentansprüche

1. Kombinations-Instrument mit einem Frontrahmen (12), einer durchsichtigen Abdeckung (16) für den Frontrahmen (12), im Kombinations-Instrument gelagerten Anzeigesystemen (2) und/oder Bedienelementen (25), einer hinter den Anzeigesystemen (2) und/oder Bedienelementen (25) angeordneten Leiterplatte (6) mit Elektronikkomponenten, wobei die Anzeigesysteme (2) und/oder Bedienelemente (25) die Leiterplatte (6) kontaktieren, sowie mit einem hinteren Verschlußdeckel (13) für das Kombinations-Instrument, **dadurch gekennzeichnet**, daß das Kombinations-Instrument einen als tragendes Bauteil ausgebildeten Systemträger (1) aufweist, der mit Ausnehmungen (21) zum Positionieren und Halten der Anzeigesysteme (2) und/oder Bedienelemente (25) versehen ist, wobei die Leiterplatte (6) mit dem Systemträger (1) verbunden ist und daß der Frontrahmen (12) und/oder der hintere Verschlußdeckel (13) als nicht tragendes Bauteil ausgebildet sind, die im Systemträger (1) positioniert und gehalten sind.

2. Kombinations-Instrument nach Anspruch 1, **dadurch gekennzeichnet**, daß das jeweilige Anzeigesystem (2) als Meßwerk (2a), insbesondere Meßwerk (2a) mit Zeiger (10, 11) und Zifferblatt (23) bzw. Symbolscheibe (22), oder als anzeigende Komponente (5), insbesondere unter Verwendung von Licht, ausgebildet ist.

3. Kombinations-Instrument nach Anspruch 1 oder 2, **dadurch gekennzeichnet**, daß der Systemträger (1) auf seiner Rückseite mit den Ausnehmungen (21) für die Anzeigesysteme (2) bzw. Bedienelemente (25) versehen ist.

4. Kombinations-Instrument nach Anspruch 3, **dadurch gekennzeichnet**, daß die Ausnehmungen (21) als Schächte ausgebildet sind und/oder durch der Versteifung des Systemträgers (1) dienende Rippen und/oder Waben (19, 20) gebildet sind.

5. Kombinations-Instrument nach einem der Ansprüche 1 bis 4, **dadurch gekennzeichnet**, daß entsprechend dem maximalen Bestückungsumfang an Anzeigesystemen (2) und/oder Bedienelementen (25) Ausnehmungen (21) im Systemträger (1) vorgesehen sind.

6. Kombinations-Instrument nach einem der Ansprüche 1 bis 5, **dadurch gekennzeichnet**, daß die Ausnehmungen (21) charakteristische Querschnitte für die zugeordneten Anzeigesysteme (2) bzw. Bedienelemente (25) aufweisen.

7. Kombinations-Instrument nach einem der Ansprüche 1 bis 6, **dadurch gekennzeichnet**, daß sich der Systemträger (1) über die gesamte Sichtfläche des Kombinations-Instrumentes erstreckt.

8. Kombinations-Instrument nach einem der Ansprüche 1 bis 7, **dadurch gekennzeichnet**, daß der Systemträger (1) aus Kunststoff besteht und insbesondere als Kunststoff-Spritzgußteil ausgebildet ist.

9. Kombinations-Instrument nach einem der Ansprüche 1 bis 8, **dadurch gekennzeichnet**, daß die Leiterplatte (6) schwimmend im Systemträger (1) gelagert ist.

10. Kombinations-Instrument nach Anspruch 9, **dadurch gekennzeichnet**, daß die schwimmende Lagerung der Leiterplatte (6) im Systemträger (1) mittels Zapfen (26, 27)-Langloch-Verbindungen zwischen Leiterplatte (6) und Systemträger (1) erfolgt.

11. Kombinations-Instrument nach Anspruch 9 oder 10, **dadurch gekennzeichnet**, daß die Kontaktierung von Anzeigesystemen (2) bzw. Bedienelementen (25) und Leiterplatte (6) schwimmend erfolgt.

12. Kombinations-Instrument nach einem der Ansprüche 9 bis 11, **dadurch gekennzeichnet**, daß die Anzeigesysteme (2) bzw. Bedienelemente (25) senkrecht zur Längserstreckung der Ausnehmungen (21) unverschieblich im Systemträger (1) gelagert sind und die Leiterplatte (1) in der Leiterplattenebene (X, Y) relativ zum Systemträger (1) verschieblich gelagert ist.

13. Kombinations-Instrument nach einem der Ansprüche 9 bis 12, **dadurch gekennzeichnet**, daß der Systemträger (1) zur Aufnahme der Leiterplatte (6) und/oder eines Zifferblattes (8) Zapfen (26, 27) aufweist, die Langlöcher (26a, 27a) in der Leiterplatte (6) bzw. dem Ziffernblatt (8) durchsetzen, wobei ein im zentralen Bereich der Leiterplatte (6) bzw. des Zifferblattes (8) angeordnetes Langloch (27a) in Breitenrichtung (Y) der Leiterplatte (6) bzw. des Zifferblattes (8) und mindestens ein außerhalb des zentralen Bereiches angeordnetes Langloch (26a) in Längsrichtung (X) der Leiterplatte (6) bzw. des Zifferblattes (8) verläuft.

14. Kombinations-Instrument nach Anspruch 13, **dadurch gekennzeichnet**, daß zwei in Längsrichtung (X) der Leiterplatte (6) bzw. des Zifferblattes (8) verlaufende Langlöcher (26a) vorgesehen sind, die im Bereich der beiden Schmalseiten der Leiterplatte (6) bzw. des Zifferblattes (8) angeordnet sind.

15. Kombinations-Instrument nach Anspruch 13 oder 14, **dadurch gekennzeichnet**, daß die Befestigung der Leiterplatte (6) und/oder des Zifferblattes (8) über Schrauben (57) oder Nietbolzen erfolgt, die die Langlöcher (26a, 27a, 55) der Leiterplatte (6) bzw. des Zifferblattes (8) durchsetzen.

16. Kombinations-Instrument nach Anspruch 15, **dadurch gekennzeichnet**, daß zur Befestigung der Leiterplatte (6), des Zifferblattes (8) und der weiteren Anzeigesystem (2) und/oder Bedienelemente (25) an der Leiterplatte (6) zusätzliche Langlöcher (55) in der Leiterplatte (6) bzw. im Zifferblatt (8) vorgesehen sind, wobei die Längsausrichtung dieser Langlöcher (55) von einem Nullpunkt (56) der Leiterplatte (6) bzw. des Zifferblattes (8) zu dem Mittelpunkt des jeweiligen Langlochs (55) erfolgt.

17. Kombinations-Instrument nach Anspruch 16, **dadurch gekennzeichnet**, daß der Nullpunkt (56) der Mittelpunkt des im zentralen Bereich angeordneten, in Querrichtung (Y) orientierten Langloches (27a) ist.

18. Kombinations-Instrument nach einem der Ansprüche 9 bis 17, **dadurch gekennzeichnet**, daß die Leiterplatte (6) und Anzeigesysteme (2, 2a, 2b, 2c) senkrecht zur Längserstreckung der Ausnehmungen (21) verschieblich im Systemträger gelagert sind.

19. Kombinations-Instrument nach Anspruch 18, **dadurch gekennzeichnet**, daß die verschieblichen Anzeigesysteme (2, 2a, 2b, 2c) in Ausnehmungen (21) gehalten sind, wobei die die Ausnehmungen (21) aufweisenden Bauteile des Systemträgers (1) und die Leiterplatte (6) über senkrecht zur Längserstreckung der Ausnehmung (21) nachgiebige Stege (29, 35) in einer Grundplatte (18) des Systemträgers (1) gehalten sind.

20. Kombinations-Instrument nach einem der Ansprüche 1 bis 19, **dadurch gekennzeichnet**, daß der Verschlußdeckel (13) im Systemträger (1) gelagert oder mit dem Frontrahmen (12) verbunden ist.

21. Kombinations-Instrument nach einem der Ansprüche 1 bis 20, **dadurch gekennzeichnet**, daß der Verschlußdeckel (13) mit Ausnehmungen (17) versehen ist.

22. Kombinations-Instrument nach einem der Ansprüche 1 bis 21, **dadurch gekennzeichnet**, daß es im Bereich von dessen Massenschwerpunkt in einer Armaturentafel eines Kraftfahrzeuges befestigt ist.

23. Kombinations-Instrument nach einem der Ansprüche 1 bis 22, **dadurch gekennzeichnet**, daß es mittels des Systemträgers (1) in einer Armaturentafel eines Kraftfahrzeuges befestigt ist.

## Claims

1. Combination instrument comprising a front frame (12), a transparent cover (16) for the front frame (12), indicating systems (2) and/or operating elements (25) mounted in the combination instrument, a circuitboard (6) with electronic components arranged behind the indicating systems (2) and/or operating elements (25), and with the indicating systems (2) and/or operating elements (25) making contact with the circuitboard (6), and with a rear closure cover (13) for the combination instrument, **characterized in that** the combination instrument comprises a system carrier (1), which is designed as a carrying component and provided with cutouts (21) for positioning and holding the indicating systems (2) and/or operating elements (25), and the circuitboard (6) is connected to the system carrier (1), and the front frame (12) and/or the rear closure cover (13) is designed as a non-supporting component positioned and held in the system carrier (1).

2. Combination instrument according to Claim 1, **characterized in that** a respective indicating system (2) is arranged to be a measuring unit (2a), in particular a measuring unit (2a) with indicator (10, 11) and dial face (23) or symbol face (22), or an indicating component (5), in particular one using light.

3. Combination instrument according to Claim 1 or 2, **characterized in that** the system carrier (1) is at its rear provided with cutouts (21) for indicating systems (2) or the operating elements (25).

4. Combination instrument according to Claim 3, **characterized in that** the cutouts (21) are designed as shafts and/or by webs and/or honeycombs (19, 20) serving to reinforce the system carrier (1).

5. Combination instrument according to one of Claims 1 to 4, **characterized in that** cutouts (21) are provided in the system carrier (1) to correspond with the maximum amount of equipment on the indicating systems (2) and/or operating elements (25).

6. Combination instrument according to one of Claims 1 to 5, **characterized in that** the cutouts (21) have characteristic cross-sections for associated indicating systems (2) or operating elements (25).

7. Combination instrument according to one of Claims 1 to 6, **characterized in that** the system carrier (1) extends over the entire visual surface of the combination instruments.

8. Combination instrument according to one of Claims 1 to 7, **characterized in that** the system carrier 1 is made of plastic material and in particular arranged as an injection moulded plastic component.

9. Combination instrument according to one of Claims 1 to 8, **characterized in that** the circuitboard (6) is in a floating manner mounted in the system carrier (1).

10. Combination instrument according to Claim 9, **characterized in that** the floating mounting of the circuitboard (6) in the system carrier (1) is established by means of pins (26, 27) - elongated hole connections between circuitboard (6) and system carrier (1).

11. Combination instrument according to Claim 9 or 10, **characterized in that** contact of indicating systems (2) or operating elements (25) and circuitboard (6) is made in a floating manner.

12. Combination instrument according to one of Claims 9 to 11, **characterized in that** the indicating systems (2) or the operating elements (25) are mounted perpendicularly to the longitudinal extent of the cutouts (21) and indisplaceably in the system carrier (1), and the circuitboard (1) is mounted so as to be displaceable in the circuitboard plane (X, Y) relative to the system carrier (1).

13. Combination instrument according to one of Claims 9 to 12, **characterized in that** the system carrier (1) comprises pins (26, 27) for accommodating the circuitboard (6) and/or a dial face (8) which pass through elongated holes (26a, 27a) in the circuitboard (6) or in the dial face (8), and an elongated hole (27a) arranged in the central area of the circuitboard (6) or the dial face (8) extends in the width direction (Y) of the circuitboard (6) or the dial face (8) and at least one elongated hole (26a) arranged outside the central area extends in the longitudinal direction (X) of the circuitboard (6) or the dial face (8).

14. Combination instrument according to Claim 13, **characterized in that** two elongated holes (26a), which extend in the longitudinal direction (X) of the circuitboard (6) or the dial face (8), are provided and arranged in the area of both narrow sides of the circuitboard (6) or the dial face (8).

15. Combination instrument according to Claim 13 or 14, **characterized in that** the circuitboard (6) and/or the dial face (8) are attached by screws (57) or rivet bolts which pass through the elongated holes (26a, 27a, 55) of the circuitboard (6) or the dial face (8).

16. Combination instrument according to Claim 15, **characterized in that** additional elongated holes (55) are provided in the circuitboard (6) or the dial face (8) for the purpose of attaching the circuitboard (6), the dial face (8) and the other indicating systems (2) and/or operating elements (25) to the circuitboard (6), and the longitudinal alignment of these elongated holes (55) is based on a zero point (56) of the circuitboard (6) or the dial face (6) toward the centre point of a respective elongated hole (55).

17. Combination instrument according to Claim 16, **characterized in that** the zero point (56) is the centre point of the elongated hole (27a) which is arranged in the central area and oriented in the transverse direction (Y).

18. Combination instrument according to one of Claims 9 to 17, **characterized in that** the circuitboard (6) and the indicating systems (2, 2a, 2b, 2c) are mounted to be movable in the system perpendicularly to the longitudinal extent of the cutouts (21).

19. Combination instrument according to Claim 18, **characterized in that** the movable indicating systems (2, 2a, 2b, 2c) are held in cutouts (21), and those components of the system carrier (1) comprising said cutouts (21) and the circuitboard (6) are held in a base plate (18) of the system carrier (1) via webs (29, 35) which are resilient perpendicularly to the longitudinal extent of the cutout (21).

20. Combination instrument according to one of Claims 1 to 19, **characterized in that** the closure cover (13) is mounted in the system carrier (1) or connected to the front frame (12).

21. Combination instrument according to one of Claims 1 to 20, **characterized in that** the closure cover (13) is provided with cutouts (17).

22. Combination instrument according to one of Claims 1 to 21, **characterized in that** it is mounted in the area of its centre of mass in the instrument panel of a motor vehicle.

23. Combination instrument according to one of Claims 1 to 22, **characterized in that** it is mounted by means of the system carrier (1) in the instrument panel of a motor vehicle.

## Revendications

1. Instrument de bord combiné comportant un cadre avant (12), un couvercle transparent (16) pour le cadre avant (12), des systèmes d'information (2) et/ou des éléments de manoeuvre (25) posés dans l'instrument de bord combiné, une carte à circuit imprimé (6), avec des composants électroniques, disposée derrière les systèmes d'information (2) et/ou les éléments de manoeuvre (25), les systèmes d'information (2) et/ou les éléments de manoeuvre (25) étant en contact avec la carte à circuit imprimé (6), et comportant aussi un couvercle d'obturation arrière (13) pour l'instrument de bord combiné, caractérisé par le fait que l'instrument de bord combiné présente un porte-systèmes (1) qui est conçu en tant que composant porteur et qui est muni d'évidements (21) pour positionner et maintenir les systèmes d'information (2) et/ou les éléments de manoeuvre (25), la carte à circuit imprimé (6) étant reliée au porte-systèmes (1) et que le cadre avant (12) et/ou le couvercle d'obturation arrière (13) sont conçus en tant que composant non porteur, qui sont positionnés et maintenus dans le porte-systèmes (1).

2. Instrument de bord combiné selon la revendication 1, caractérisé par le fait que chaque système d'information (2) est conçu sous forme d'un appareil de mesure (2a), en particulier d'un appareil de mesure (2a) avec aiguille (10, 11) et cadran (23) portant des chiffres ou cadran (22) portant des symboles ou sous forme de composants indicateurs (5), en particulier avec emploi de la lumière.

3. Instrument de bord combiné selon la revendication 1 ou 2, caractérisé par le fait que le porte-systèmes (1) est muni, sur sa face arrière, d'évidements (21) pour les systèmes d'information (2) ou les éléments de manoeuvre (25).

4. Instrument de bord combiné selon la revendication 3, caractérisé par le fait que les évidements (21) sont conçus sous forme de puits et/ou sont formés par les nervures et/ou les nids d'abeille (19, 20) qui servent à raidir le porte-systèmes (1).

5. Instrument de bord combiné selon l'une des revendications 1 à 4, caractérisé par le fait que des évidements (21) sont prévus dans le porte-systèmes (1) en fonction du garnissage maximal en systèmes d'information (2) et/ou en éléments de manoeuvre (25).

6. Instrument de bord combiné selon l'une des revendications 1 à 5, caractérisé par le fait que les évidements (21) présentent des sections caractéristiques pour les systèmes d'information (2) ou les éléments de manoeuvre associés.

7. Instrument de bord combiné selon l'une des revendications 1 à 6, caractérisé par le fait que le porte-systèmes (1) s'étend sur toute la surface visible de l'instrument de bord combiné.

8. Instrument de bord combiné selon l'une des revendications 1 à 7, caractérisé par le fait que le porte-systèmes (1) est constitué de plastique et en particulier conçu sous forme de pièce plastique moulée par injection.

9. Instrument de bord combiné selon l'une des revendications 1 à 8, caractérisé par le fait que la carte à circuit imprimé (6) porte dans le porte-systèmes (1) avec flottement.

10. Instrument de bord combiné selon la revendication 9, caractérisé par le fait que la portée flottante de la carte à circuit imprimé (6) dans le porte-systèmes (1) se fait au moyen de liaisons téton (26, 27) - lumière entre carte à circuit imprimé (6) et porte-systèmes (1).

11. Instrument de bord combiné selon la revendication 9 ou 10, caractérisé par le fait que la mise en contact des systèmes d'information (2) et des éléments de manoeuvre (25) et de la carte de circuit imprimé (6) se fait avec flottement.

12. Instrument de bord combiné selon l'une des revendications 9 à 11, caractérisé par le fait que les systèmes d'information (2) ou les éléments de manoeuvre (25) sont portés dans le porte-systèmes (1), perpendiculairement à l'extension longitudinale des évidements (21), sans liberté de coulissement et que la carte à circuit imprimé (1) est portée avec liberté de coulisser dans le plan (X, Y) de la carte de circuit imprimé par rapport au porte-systèmes (1).

13. Instrument de bord combiné selon l'une des revendications 9 à 12, caractérisé par le fait que le porte-systèmes (1) présente, pour recevoir la carte à circuit imprimé (6) et/ou un cadran portant des chiffres (8), des tétons (26, 27) qui traversent des lumières (26a, 27a) prévues dans la carte à circuit imprimé (6) ou dans le cadran portant des chiffres (8), une lumière (27a), disposée dans la zone centrale de la carte à circuit imprimé (6) ou du cadran portant des chiffres (8) étant orientée selon la direction de la largeur (Y) de la carte à circuit imprimé (6) ou du cadran portant des chiffres (8) et au moins une lumière (26a) disposée à l'extérieur de la zone centrale étant orientée selon la direction longitudinale (X) de la carte à circuit imprimé (6) ou du cadran portant des chiffres (8).

14. Instrument de bord combiné selon la revendication 13, caractérisé par le fait que sont prévues deux lumières (26a) qui sont orientées selon la direction longitudinale (X) de la carte à circuit imprimé (6) ou du cadran portant des chiffres (8) et sont disposées au voisinage des deux petits côtés de la carte à circuit imprimé (6) ou du cadran portant des chiffres (8).

15. Instrument de bord combiné selon la revendication 13 ou 14, caractérisé par le fait que la fixation de la carte à circuit imprimé (6) et/ou du cadran portant des chiffres (8) se fait au moyen de vis (57) ou de tiges rivées qui traversent les lumières (26a, 27a, 55) de la carte à circuit imprimé (6) ou du cadran portant des chiffres (8).

16. Instrument de bord combiné selon la revendication 15, caractérisé par le fait que pour la fixation de la carte à circuit imprimé (6), du cadran portant des chiffres (8) et de l'autre système d'information (2) et/ou des autres éléments de manoeuvre (25) sur la carte à circuit imprimé (6), des lumières supplémentaires (55) sont prévues dans la carte à circuit imprimé (6) ou dans le cadran portant des chiffres (8), l'orientation longitudinale de ces lumières (55) se faisant d'un point zéro (56) de la carte à circuit imprimé (6) ou du cadran portant des chiffres (8) au point médian de la lumière respective (55).

17. Instrument de bord combiné selon la revendication 16, caractérisé par le fait que le point zéro (56) est le point médian de la lumière (27a) disposée dans la zone centrale et orientée selon la direction transversale (Y).

18. Instrument de bord combiné selon l'une des revendications 9 à 17, caractérisé par le fait que la carte à circuit imprimé (6) et les systèmes d'information (2, 2a, 2b, 2c) portent sur le porte-systèmes avec liberté de coulisser perpendiculairement par rapport à l'extension longitudinale des évidements (21).

19. Instrument de bord combiné selon la revendication 18, caractérisé par le fait que les systèmes d'information coulissants (2, 2a, 2b, 2c) sont maintenus dans des évidements (21), les composants du porte-systèmes (1) présentant les évidements (21) et la carte à circuit imprimé (6) étant maintenus dans une plaque de base (18) du porte-systèmes (1) par des nervures (29, 35) qui peuvent céder, en se déformant, perpendiculairement a l'extension longitudinale de l'évidement (21).

20. Instrument de bord combiné selon l'une des revendications 1 à 19, caractérisé par le fait que le couvercle d'obturation (13) porte sur le porte-systèmes (1) ou qu'il est relié au cadre avant (12).

21. Instrument de bord combiné selon l'une des revendications 1 à 20, caractérisé par le fait que le couvercle d'obturation (13) est muni d'évidements (17).

22. Instrument de bord combiné selon l'une des revendications 1 à 21, caractérisé par le fait qu'il est fixé dans un tableau de bord d'un véhicule à moteur au voisinage de son centre de gravité.

23. Instrument de bord combiné selon l'une des revendications 1 à 22, caractérisé par le fait qu'il est fixé dans un tableau de bord d'un véhicule à moteur au moyen du porte-systèmes (1).
